# DEMANDE DE BREVET EUROPEEN

(11) **EP 2 597 074 A2**
(43) Date de publication de la demande: **29.05.2013**
(21) Numéro de dépôt: 13155843.9
(22) Date de dépôt: 27.10.2008
(51) Int. Cl.: C04B 28/02, B44D 3/22, B44D 5/00, C04B 41/50, E04F 13/02, E04F 21/06

(54) **Procédé de realisation d'un revetement décoratif sur un support par application d'une pate**

(30) Priorité: 29.10.2007 FR 0758661
(62) Demande divisionnaire de: 08844336.1
(71) Demandeur: RM Distribution, 92500 Rueil Malmaison (FR)
(72) Inventeur: Secret, Dominique, 92420 Vaucresson (FR); Secret, Nicole, 92420 Vaucresson (FR)
(74) Mandataire: Cabinet Plasseraud

(57) **Abrégé**

L'invention se rapporte à un concept de décoration de support, en particulier de surfaces intérieures de bâtiment, concept dans lequel on utilise une composition sèche destinée à être mélangée avec de l'eau pour préparer plus facilement une pâte applicable sur le support, en vue de réaliser un revêtement décoratif ayant un "toucher béton", un "aspect béton", une "dureté béton", et qui de surcroît est décollable à la décolleuse à papier peint.
L'invention concerne un procédé d'obtention d'un revêtement décoratif béton par mélangeant avec de l'eau une composition pulvérulente sèche comprenant en pourcentages massiques sur sec : de 30 à 60 de ciment, de 30 à 60 de charge, de 0,5 à 10 d'au moins un agent absorbant, de 0,01 à 1 d'au moins un agent fibreux de flexibilité, de 0,01 à 3 d'au moins un retardateur de prise, de 0,01 à 1 d'agent mouillant, de 0,1 à 20 de particules décoratives, de 0,5 à 10 d'au moins un durcisseur, et de 0 à 1 d'au moins un colorant.
Cette procédé est mise en oeuvre par des outils comme une taloche crantée pour l'application de la pâte, un peigne éventail pour réaliser un effet griffé, une brosse à poils de nylon pour réaliser un effet brossé ou peigné, une spatule biplaque à structures pour réaliser un effet rayures ou stries.

## Description

### Domaine de l'invention

Le domaine de l'invention est celui des revêtements décoratifs (de préférence intérieurs) destinés à être appliqués sur des supports existants dans des bâtiments, plus particulièrement sur des murs, des parois ou des plafonds.

Plus précisément, l'invention se rapporte à un concept de décoration de supports, en particulier de surfaces intérieures de bâtiments, concept dans lequel on utilise une composition sèche destinée à être mélangée avec de l'eau pour préparer facilement une pâte applicable sur le support, en vue de réaliser un revêtement décoratif. Un tel concept inclut le procédé de réalisation du revêtement décoratif ainsi que les outils, les produits, les accessoires et le mode d'emploi utile à la mise en oeuvre du procédé de réalisation du revêtement décoratif. Un tel revêtement décoratif se doit d'être accessible à tout un chacun, c'est-à-dire à des non-professionnels. Pour cela, le mot d'ordre doit être la simplicité de mise en oeuvre. En outre, pour être attractif commercialement, un tel concept de décoration doit pouvoir offrir aux consommateurs, une palette extrêmement large de variantes décoratives.

### Arrière-plan technologique et problème technique

A titre d'illustration des concepts de décoration intérieure évoqués ci-dessus, on peut citer deux documents brevets et deux développements commerciaux, dont les inventeurs de la présente demande sont à l'origine.

La demande de brevet français N° 2 719 314 décrit une composition sèche destinée à être mélangée avec un liquide tel que de l'eau en vue de son application sur un support (parois de bâtiments) pour constituer un revêtement de ce support. Cette composition sèche contient des particules minérales ou pseudo-minérales telles que des coquilles broyées, des fibres artificielles hydrophobes et des fragments de cellulose, voire éventuellement de la colle en poudre soluble dans le liquide de mélange. Le revêtement décoratif que l'on cherche à obtenir à partir de cette composition est un revêtement ayant un aspect granuleux, rappelant la surface de minéraux, c'est la raison pour laquelle la composition comprend pour l'essentiel, des particules minérales combinées avec un substrat constitué par des fibres et des fragments de cellulose, ledit substrat assurant la cohésion de l'ensemble aussi bien lors de l'application sur le support que pour le revêtement appliqué sur ledit support.

Il est prévu environ 6 parties en poids de particules minérales pour une partie en poids de fibres et de fragments de cellulose. La colle en poudre soluble dans l'eau est ajoutée à raison de 8% en poids. Après mélange de trois parties en poids de composition sèche pour 5 parties en poids d'eau, on obtient une pâte homogène qui peut être appliquée sur le support très facilement car elle s'étale très bien à la spatule, à la taloche, ou bien encore à la truelle, en formant une couche continue qui aisée à travailler et qui ne se dissocie pas notamment grâce à la colle qui adhère au support et aux fibres qui donnent de la cohésion aux particules minérales. Après séchage, le revêtement obtenu présente un aspect minéral souhaité, les fibres étant pratiquement invisibles à l'oeil nu. Cette composition et le revêtement obtenu à partir de celle-ci, peuvent comprendre divers additifs tels que des colorants, notamment sous forme particulaire, de même que des billes rigides utiles comme éléments de calibrage de la pâte étalée à la spatule. Ces additifs particulaires peuvent être des paillettes, des pastilles de mica, des particules dorées ou bien encore des longs fils colorés.

La demande FR N° 2 719 314 enseigne également un procédé de préparation d'une pâte par mélange de la composition sèche avec de l'eau. Le procédé d'application de cette pâte sur un support pour former un revêtement fait également partie de l'enseignement de cette demande de brevet français.

Sur le plan commercial, cette demande correspond peu ou prou au concept décoratif commercial dénommé "Mur d'autrefois®".

Le brevet européen EP N° 1 099 675 divulgue un revêtement et un procédé de décoration de surface murale par application dudit revêtement. Ce revêtement comprend une couche de revêtement interne destinée à être appliquée sur la surface (régulière ou non) et qui est constituée d'une première pâte à l'eau comprenant des éléments absorbants capables d'absorber l'eau et une couche de revêtement externe qui est appliquée sur ladite couche de revêtement interne, après séchage de cette dernière, et qui est constituée d'une seconde pâte à l'eau, lesdits éléments absorbants comprenant en combinaison des particules de cellulose et de vermiculite. Ce revêtement est conçu pour s'affranchir de l'étape initiale d'imperméabilisation de la surface à revêtir. Il ne comprend que des matériaux hydrophiles, inoffensifs et sans odeur. La première pâte à l'eau est à base de carbonate de calcium, de fine vermiculite, de résine synthétique en poudre, de biocide, d'éléments fibreux, de fines particules de cellulose et de charges minérales. Après séchage de cette couche interne absorbante, on applique sur celle-ci, une couche de revêtement externe à base de la seconde pâte à l'eau comprenant du carbonate de calcium, de l'oxyde de titane, un épaississant cellulosique, une résine acrylique, un biocide, un agent de coalescence et une charge minérale.

Une couche complémentaire de protection à base de vernis ou de cire peut être appliquée sur au moins l'un des deux revêtements internes et externes.

Il est envisagé dans ce brevet EP N° 1 099 675, de donner un aspect de surface non uniforme au revêtement : accentuation de reliefs, création de motifs décoratifs par incrustation de motifs en creux, utilisation de rubans adhésifs selon des lignes verticales et horizontales pour donner un aspect carreau, dalle ou brique, application de différentes couleurs. L'étape de finition du procédé selon le document EP-B-1 099 675 comprend une opération de lissage/polissage du revêtement à l'aide d'un galet ou d'un morceau de marbre. Le concept décoratif correspondant à ce brevet EP-B1 099 675 est le développement commercial dénommé "Façon tadelakt®". Il s'agit en effet de revêtement imitant le tadelakt ou la pierre et présentant pour le tadelakt un effet miroir, éventuellement avec des motifs de décoration incrustés ou imitant la pierre pour le concept comme la pierre avec, dans les deux cas, de multiples variantes de coloration.

Le problème technique à la base de la présente invention est de proposer un nouveau concept de décoration dans le même esprit que les concepts "mur d'autrefois®" et "Façon tadelakt®" évoqués ci-dessus, mais appliqués cette fois pour l'imitation de l'aspect béton brut en tant que revêtement de décoration intérieure, de murs, parois ou plafonds de bâtiments, entre autres.

La mise au point de cette alternative de décoration a généré un certain nombre de difficultés techniques incidentes, dont notamment :
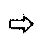 Difficulté de trouver une composition sèche donnant en mélange avec l'eau une pâte qui puisse être d'une consistance mousseuse, qui ne tache pas, qui permette une application crémeuse sur les supports en fine épaisseur de 2 à 5 mm, et, qui, lorsqu'elle sèche, donne un revêtement ayant un toucher "béton", un aspect "béton", une dureté "béton", et qui de surcroît est décollable à la décolleuse à papier peints.
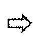 Difficulté de trouver des outils pour permettre à l'utilisateur de créer des structures accentuant les différents aspects bruts que l'on peut rencontrer pour le béton d'architecture (brossé, délavé, ligné ou strié) pour apporter un aspect décoratif.

### Objectifs de l'invention

L'un des objectifs essentiels de la présente invention est de proposer un nouveau concept de décoration intérieure d'imitation de l'aspect brut du béton, basé sur la fourniture d'une composition sèche, à partir de laquelle peut être préparée par mélange avec un liquide, de préférence de l'eau, une pâte permettant la réalisation d'un revêtement décoratif ayant l'aspect du béton sur des supports divers tels que des surfaces intérieures de bâtiments.

Un autre objectif essentiel de la présente invention est de fournir une composition sèche, à partir de laquelle peut être préparée par mélange avec un liquide, de préférence de l'eau, une pâte permettant la réalisation d'un revêtement décoratif ayant l'aspect du béton sur des supports divers tels que des surfaces intérieures de bâtiments, cette composition sèche donnant en mélange avec l'eau une pâte qui puisse être d'une consistance mousseuse, qui ne tache pas, qui permette une application crémeuse sur les supports en fine épaisseur de 2 à 5 mm, et, qui, lorsqu'elle sèche, donne un revêtement qui a un toucher "béton", un aspect "béton" et une dureté "béton", et qui de surcroît est décollable à la décolleuse à papier peints.

Un autre objectif essentiel de la présente invention est de fournir un nouveau procédé de réalisation d'un revêtement décoratif de décoration intérieure d'imitation de l'aspect brut du béton, basé sur la fourniture d'une composition sèche, à partir de laquelle peut être préparée par mélange avec un liquide, de préférence de l'eau, une pâte permettant la réalisation d'un revêtement décoratif ayant l'aspect du béton sur des supports divers tels que des surfaces (par exemple intérieur), de bâtiments.

Un autre objectif essentiel de la présente invention est de fournir des outils adaptés aux procédés de réalisation d'un revêtement décoratif tel que défini dans l'objectif ci-dessus, ces outils permettant à l'utilisateur de créer des structures accentuant les différents aspects bruts que l'on peut rencontrer pour le béton d'architecture (brossé, délavé, ligné ou strié) pour apporter un aspect décoratif.

Un autre objectif essentiel de la présente invention est de fournir des moyens et une méthode de réalisation d'un revêtement décoratif intérieur imitant le béton brut, qui soient à la portée d'un public de non-professionnels, grâce à sa simplicité de mise en oeuvre et de réalisation et qui offrent par ailleurs des variantes décoratives multiples laissant à chaque utilisateur une part de création pour parvenir in fine à des résultats personnalisés et très réussis sur le plan esthétique.

Un autre objectif essentiel de la présente invention est de fournir un nouveau concept de décoration intérieure d'imitation du béton brut qui soit économique.

Un autre objectif essentiel de la présente invention est de fournir un revêtement décoratif intérieur ayant l'aspect béton et qui puisse être obtenu par mélange aisé d'une composition sèche avec un liquide tel que l'eau, sans savoir-faire particulier et en formant, de manière reproductible, un mélange pâteux homogène, propre à être appliqué sur le support.

Un autre objectif essentiel de la présente invention est de fournir un revêtement décoratif intérieur, imitant l'aspect brut du béton, qui puisse être appliqué sur n'importe quel type de support, que la surface soit régulière ou non.

Un autre objectif essentiel de la présente invention est d'obtenir un revêtement décoratif intérieur ayant l'aspect du béton brut, qui accroche parfaitement sur tout support et qui bénéficie d'une bonne tenue dans le temps tout en étant par ailleurs décollable à l'aide de moyens usuels pour le décollage de papiers peints (décolleuse à vapeur).

### Brève description de l'invention

Ces objectifs, parmi d'autres, sont atteints par l'invention qui concerne en premier lieu une composition, de préférence sèche, destinée notamment à être mélangée avec de l'eau pour préparer une pâte applicable sur un support tel qu'une surface intérieure de bâtiment, pour réaliser un revêtement décoratif, caractérisée en ce qu'elle comprend (en % massique sur sec) :
● de 30 à 60 de ciment,
● de 30 à 60 de charge,
● de 0,5 à 10 d'au moins un agent absorbant,
● de 0,01 à 1 d'au moins un agent fibreux de flexibilité,
● de 0,01 à 3 d'au moins un retardateur de prise,
●de 0,01 à 1 d'agent mouillant,
●de 0,1 à 20 de particules décoratives,
● de 0,5 à 10 d'au moins un durcisseur,
● et de 0 à 1 d'au moins un colorant.

Selon un autre de ses aspects, la présente invention concerne un procédé de préparation d'une pâte applicable sur un support pour réaliser un revêtement décoratif imitant l'aspect du béton brut, ce procédé étant caractérisé en ce qu'il consiste essentiellement à mélanger une quantité donnée de la composition, de préférence sèche, telle que définie ci-dessus, avec un volume donné d'eau.

Dans un autre de ses aspects, l'invention concerne un procédé de réalisation d'un revêtement décoratif imitant le béton brut sur un support par application de la pâte préparée par le procédé susvisé.

Selon un autre de ses aspects, l'invention concerne un procédé de réalisation d'un revêtement décoratif imitant le béton brut sur un support par application de la pâte préparée comme indiqué dans le procédé ci-dessus et consistant essentiellement :
a- éventuellement à préparer le support, avec une sous-couche spécifique;
b- à appliquer, de préférence à l'aide d'une taloche crantée, au moins une couche de pâte sur le support éventuellement revêtu de la sous-couche obtenue en -a-,
c- à lisser la couche obtenue en -b- au moyen d'une spatule de lissage ;
d- éventuellement à réaliser, à l'aide d'outils adaptés, des motifs décoratifs sur la couche lissée en -c- et non encore durcie;
e- éventuellement à laver la couche lissée en -c-, durcie et éventuellement décorée par des motifs obtenus à l'étape -d-, en passant une éponge de préférence humide pour produire des effets de nuances (blancheur/coloration);
f- éventuellement à appliquer un voile blanc ou coloré sur la couche lissée en -c-, durcie, et éventuellement décorée selon l'étape -d- et/ou -e-, de manière à obtenir d'autres nuances décoratives, de préférence une patine;
g- éventuellement à laisser durcir la couche lissée en -c- et éventuellement décorée selon l'étape -d- et/ou -e- et/ou -f-;
h- éventuellement à appliquer, de préférence avec un spalter ou à l'éponge, sur la couche lissée en (c), durcie et éventuellement décorée selon l'étape (d) et/ou (e) et/ou (f), une cire ou un vernis de protection, apte à rendre le revêtement lavable et à donner un aspect ciré à la finition.

Selon un autre de ses aspects, l'invention concerne un revêtement obtenu par le procédé tel que défini ci-dessus et caractérisé en ce qu'il est décollable avec des moyens adaptés pour le décollage du papier peint et à l'aide d'une spatule.

Dans un autre de ses aspects, la présente invention vise des outils pour la mise en oeuvre des procédés susvisés, caractérisés en ce que ces outils sont sélectionnés dans le groupe comprenant:
● une taloche crantée comprenant une poignée reliée par une tige à une plaque dont au moins une partie des bords sont crantés et dentés, la forme et les dimensions des dents et des crans étant choisis de telle sorte que la quantité de pâte déposée sur le support à l'aide de la taloche, permette d'obtenir à l'étape -b- une couche adaptée aux étapes suivantes;
● un peigne éventail pour effet griffé comportant un manche se prolongeant par un corps de forme triangulaire évidé dans son centre, ainsi qu'une botte de fils dont la base est subdivisée en faisceaux; la base de ladite botte étant solidaire de l'extrémité supérieure du manche de sorte que les faisceaux s'étendent en éventail dans l'évidement et au delà du bord supérieur du corps triangulaire, chaque faisceau de fils étant solidarisé au bord supérieur du corps triangulaire par une bague qui regroupe les fils dudit faisceau, l'ensemble de ces bagues déterminant l'éventail de faisceaux de fils, étant de préférence obtenue par couture dans le bord supérieur du corps triangulaire; la matière, la longueur et le diamètre des fils étant choisis de manière à ce que leur rigidité soit adapté à la production de l'effet griffé;
● une brosse (de préférence à poils de nylon) pour effet brossé ou peigné et ayant pour particularité que les touffes de poils ne sont pas égalisées à leurs extrémités;
● une spatule multi-lamellaire à structures pour effet rayures ou stries comprenant, d'une part, un support comportant une embase et éventuellement une poignée, et d'autre part, une lame flexible permettant des motifs décoratifs dénommés "à structures" constituées de deux plaques superposées :
   → une grande plaque de base dont le ou les bords longitudinaux extérieurs est ou sont destinés à venir en contact avec la pâte pour produire le motif, la nature du matériau constitutif de cette grande plaque et ses dimensions étant choisies de telle sorte que la souplesse soit adaptée et facilite la création de motifs décoratifs;
   → une petite plaque qui donne une surépaisseur à la lame dans sa partie intérieure destinée à être fixée sur l'embase,
cette partie intérieure plus épaisse étant plus rigide que la partie extérieure souple comprenant uniquement la grande plaque.

Selon encore un autre de ses aspects, la présente invention concerne un kit de revêtement décoratif caractérisé en ce qu'il comprend la composition sèche ci-dessus définie, la taloche crantée et éventuellement une spatule de lissage, et au moins l'un des composants ou accessoires ci-après:
→ au moins un apprêt spécifique pour réaliser une sous-couche,
→ une éponge pour produire des effets de nuances,
→ des colorants spécifiques pour réaliser des colorations,
→ un produit générant un voile blanc ou coloré pour créer un effet patiné,
→ une cire ou un vernis pour réaliser une couche extérieure de protection,
→ le peigne éventail et la brosse pour effet brossé telle que défini ci-dessus,
→ la spatule biplaque à structures telle que définie ci-dessus,
→ un rouleau "débulleur" de peintures, comme rouleau à picots ou à boucharder.

### Description détaillée de l'invention

La composition sèche selon l'invention présente une formule judicieusement établie pour se mélanger aisément avec un liquide, à savoir préférablement de l'eau, en vue d'obtenir une pâte homogène, applicable facilement (même par des profanes) sur un support, à l'aide de tous moyens connus et appropriés, pour obtenir un revêtement présentant un aspect esthétique imitant le béton brut. Quand le support est une surface (de préférence intérieure) de bâtiment (par exemple un mur ou un plafond), le revêtement réalisé constitue un revêtement décoratif intérieur particulièrement esthétique, et ce en offrant à l'utilisateur la possibilité de laisser libre cours à sa créativité. Un tel revêtement a également l'avantage de ne pas contenir de produits inflammables tels que des solvants. Il s'agit au contraire d'un produit applicable en phase aqueuse, qui bénéficie d'un excellent accrochage sur le support et d'une bonne tenue dans le temps, après séchage et durcissement.

Un autre intérêt non négligeable tient à sa faculté à être décollable aisément à l'aide d'un moyen conventionnel pour décoller le papier peint (décolleuse à vapeur et spatule).

La composition selon l'invention est avantageusement en pratique une forme pulvérulente, sèche, c'est-à-dire contenant par exemple moins de 1% massique d'eau.

Sur le plan quantitatif, la composition sèche selon l'invention comprend de préférence (en % massique sur sec) :
● 40 à 50 de ciment,
● 40 à 50 de charge,
● 1,5 à 2,5 d'agent absorbant,
● de 0,01 à 0,1 d'un agent fibreux de flexibilité,
● de 0,1 à 0,8 de retardateur de prise,
● de 0,1 à 0,5 d'agent mouillant,
● de 0,5 à 3 de particules décoratives,
● de 2 à 8 de durcisseur,
● et de 0 à 0,8 de colorant.

D'un point de vue qualitatif, la composition sèche selon l'invention présente les particularités évoquées ci-après.

Le ciment comprend avantageusement au moins un ciment blanc ou gris ayant une dureté appropriée.

Il est à noter que le ciment est choisi et est associé à d'autres composants de la formulation dont notamment le retardateur et le durcisseur, de telle sorte que la pâte homogène préparée à partir de la composition sèche et d'eau possède un temps d'ouverture d'au moins 5 heures, de préférence d'au moins 10 heures, par exemple comprise entre 10 et 24 heures. Il s'agit du temps pendant lequel la pâte reste suffisamment molle pour pouvoir être applicable sur le support.

Concernant la charge, elle possède de préférence une granulométrie inférieure ou égale à 0,2 mm et comprend du plâtre, du carbonate de calcium et de la résine, et éventuellement divers autres adjuvants.

L'agent absorbant a vocation à donner au revêtement un caractère décollable par les moyens classiques: décolleuse vapeur et spatule.

L'agent absorbant sélectionné selon l'invention est de préférence un agent du type de ceux comprenant des fibres de cellulose, de longueur comprise entre 100 et 3000 microns, de préférence entre 100 et 1500 microns.

L'agent de flexibilité est destiné à donner de la souplesse au revêtement en formant au sein de celui-ci, une armature souple.

L'agent fibreux de flexibilité comprend de préférence quant à lui, des fibres de polyacrylonitrile et/ou de polyacrylate. Ces fibres ont avantageuesement une longueur moyenne comprise entre 4 et 50 mm, de préférence entre 5 et 15 mm, et par exemple de l'ordre de 8 mm.

Selon une caractéristique remarquable, le retardateur de prise comprend de l'acide tartrique et/ou ses dérivés.

L'agent mouillant permet, quant à lui, de favoriser, la diffusion des éventuels colorants employés.

Il est préférable selon l'invention que l'agent mouillant comprenne de l'hexamétaphosphate et/ou ses dérivés.

Etant donné que l'invention est relative à un concept de décoration intérieure, les particules décoratives sont un composant important de la composition selon l'invention. De préférence, ces particules décoratives sont d'origine minérale et sont plutôt sélectionnées dans le groupe comprenant la vermiculite, la perlite, les micas et leurs mélanges.

Ces particules décoratives peuvent se présenter sous des formes diverses : par exemple paillettes, pastilles, particules sphériques, particules cristallines, aiguilles, fils de différentes couleurs, comme par exemple les couleurs or, noire, beige, etc.

Le durcisseur fait partie des produits courants dans le domaine des ciments et des bétons, mais, conformément à l'invention, il est avantageusement choisi dans le groupe comprenant les copolymères alcool polyvinylique/silane et leurs mélanges.

Naturellement, la composition selon l'invention n'est pas limitée aux formulations préférées définies ci-dessus. L'adjonction d'additifs propres à lui conférer diverses fonctionnalités, est parfaitement envisageable. Ainsi, des additifs de type biocide peuvent être, par exemple, incorporés à bonne escient dans ladite composition. On choisira avantageusement un biocide à large spectre d'efficacité de destruction de bactéries, de mousse, de moisissure, d'algues et de divers micro-organismes indésirables.

La composition susvisée est une composition sèche pulvérulente, obtenue par mélange de tous ces composants pulvérulents, au moyen de mélangeurs industriels adaptés. Cette composition est ensuite conditionnée en sacs, par exemple de 10 kg. Il est clair que cette composition est stable sur de très longues durées, de sorte que cette forme pulvérulente sèche est celle la mieux adaptée à la commercialisation.

Bien sûr, la commercialisation d'une pâte homogène obtenue à partir du mélange de la composition sèche et d'eau, pourrait également être envisagée. Mais il convient alors de tenir compte des problèmes de stabilité et de mettre en oeuvre des moyens permettant d'éviter le durcissement par séchage.

L'invention concerne également la préparation de la pâte applicable sur un support pour réaliser le revêtement décoratif imitant le béton. Cette préparation se fait aisément sans matériel sophistiqué de mélange. L'utilisateur doit simplement délayer la composition sèche dans de l'eau et mélanger soigneusement pour obtenir une pâte homogène. Avantageusement le mélange se fait à l'aide d'un mélangeur électrique.

La viscosité visée pour la pâte est par exemple comprise entre 50.000 et 100.000 centipoises, de préférence entre 60.000 et 80.000 centipoises, en particulier de l'ordre de 70.000 centipoises.

Les proportions de mélange sont par exemple de 10 kg de composition pulvérulente pour 4 à 8, de préférence 4 à 7, par exemple 5 litres d'eau. Les proportions poudre de composition/eau peuvent varier, selon la consistance souhaitée pour la pâte.

En particulier, cette pâte peut être de consistance mousseuse, ne tache pas, permet une application crémeuse sur les supports en fine épaisseur de 2 à 5 mm, et, lorsqu'elle sèche, donne un revêtement qui a un toucher "béton", un aspect "béton" et une dureté "béton", et qui, de surcroît, est décollable à la décolleuse à papier peints.

Le procédé de réalisation d'un revêtement décoratif aspect béton sur un support, par exemple un mur, par application de la pâte obtenue par mélange d'eau et de composition comme expliqué ci-dessus, comprend les étapes (b) d'application, de préférence à la taloche crantée, d'une couche de pâte sur le support et l'étape (c) de lissage de cette couche, de préférence à l'aide d'une spatule de lissage. Les étapes (a), (d), (e), (f), (g), (h) du procédé de réalisation du revêtement selon l'invention sont avantageuses et facultatives.

Préalablement à l'étape (a), il peut être nécessaire de nettoyer la surface à revêtir, de manière à retirer la poussière et d'éventuels dépôts gras qui sont susceptibles de nuire à l'accrochage. Si la surface présente un revêtement satiné ou brillant, si elle est glissante, ou en d'autres termes peu propice à l'accrochage du revêtement décoratif selon l'invention, il est souhaitable de rompre la continuité de cette surface en ponçant à l'aide de papier de verre, ou en griffant, lacérant ou perforant à l'aide d'un outil adapté.

L'étape (a) éventuelle de préparation du support avec une sous-couche spécifique consiste à revêtir la surface du support avec un produit constitué par une sous-couche isolante aqueuse, légèrement granitée. Cette application est effectuée avantageusement à l'aide d'un rouleau ou d'une brosse. A titre d'exemples, il peut être noté que le taux de dépôt de ce produit de sous-couche spécifique est de 200 g à 500 g par m² selon le support.

L'étape (b) d'application de la couche de pâte obtenue par mélange d'eau et de la composition susvisée s'opère de préférence à l'aide d'une taloche crantée.

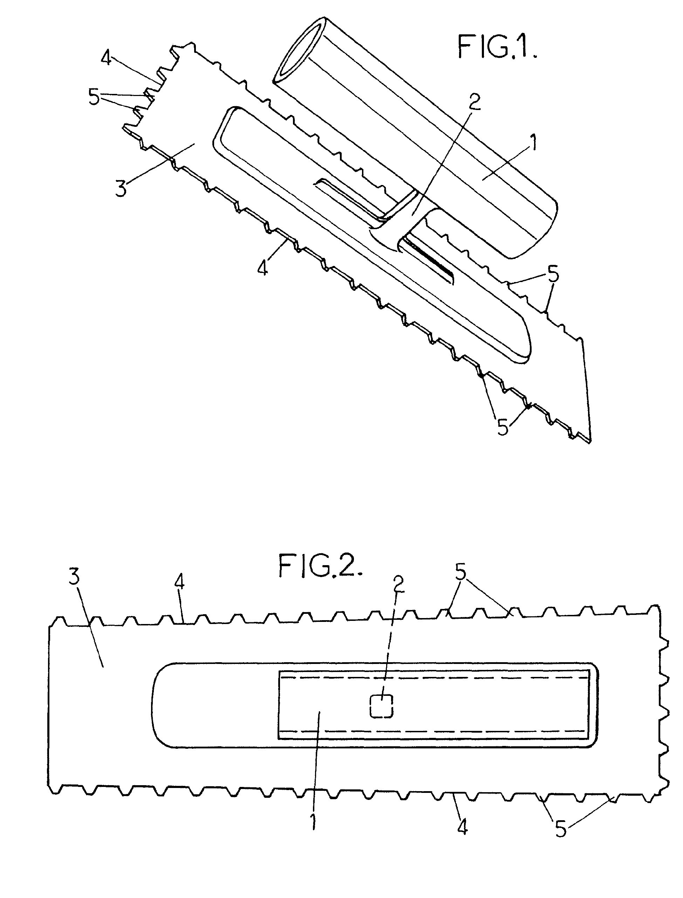

Cette taloche crantée est représentée aux figures 1 et 2 annexées.
- la figure 1 est une vue en perspective de trois-quarts de côté,
- la figure 2 est une vue de dessus de cette taloche crantée.

La taloche crantée comprend une poignée 1 reliée par une tige 2 à une plaque 3, de forme générale rectangulaire et dont les deux bords longitudinaux ainsi que l'un des bords transversaux sont pourvus de crans 4 et de dents 5. Le bord transversal pourvu de crans 4 et de dents 5, est celui disposé du même côté que la partie la plus longue de la poignée 1, par rapport à la tige 2. La taloche crantée est par exemple réalisée en plastique tel que le polycarbonate. Cette taloche crantée permet, y compris pour un néophyte, d'obtenir une parfaite régularité d'épaisseur sur toute la surface du support, et notamment dans tous les recoins d'une pièce quand le support est formé par les murs ou le plafond d'un bâtiment. Cette épaisseur de dépôt est contrôlée par la forme et la dimension, et donc par la découpe des dents 5 et des crans 4. Les dimensions choisies sont notamment la hauteur des dents 5 et la longueur des crans 4. Par exemple, cette hauteur de dents peut être de l'ordre de 5 mm et la longueur du cran 4 de l'ordre de 1 cm. La quantité de pâte déposée sur le support à l'aide de cette taloche crantée correspond ainsi à la juste quantité nécessaire pour créer ensuite les motifs décoratifs avec les outils adaptés. Incidemment, cette régularité d'épaisseur permet un séchage plus uniforme et donc un lissage également plus régulier (étapes c et g).

Le taux de dépôt de l'étape (b) est par exemple compris entre 1 et 2 kg, de préférence entre 1,5 et 1,7 kg.

La couche obtenue à l'étape (b) est lissée lors de l'étape (c) au moyen d'une spatule de lissage classique.

L'état de surface lisse ainsi obtenu peut être celui du revêtement final ou peut servir de matrice pour réaliser des motifs décoratifs sur le revêtement non durci, à l'aide d'outils adaptés (étape d). Les outils utilisables dans cette étape (d) sont notamment :
i) le peigne éventail pour effet griffé,
ii) la brosse, de préférence à poils de nylon pour effet brossé ou peigné,
iii) la spatule biplaque à structures pour effet rayures ou stries,
iv) le rouleau à picots ou à boucharder pour obtenir les effets du même nom.

Les outils (i, ii, iii, iv) sont de nouveaux outils au sens de l'invention.

### i) Le peigne éventail pour effet griffé

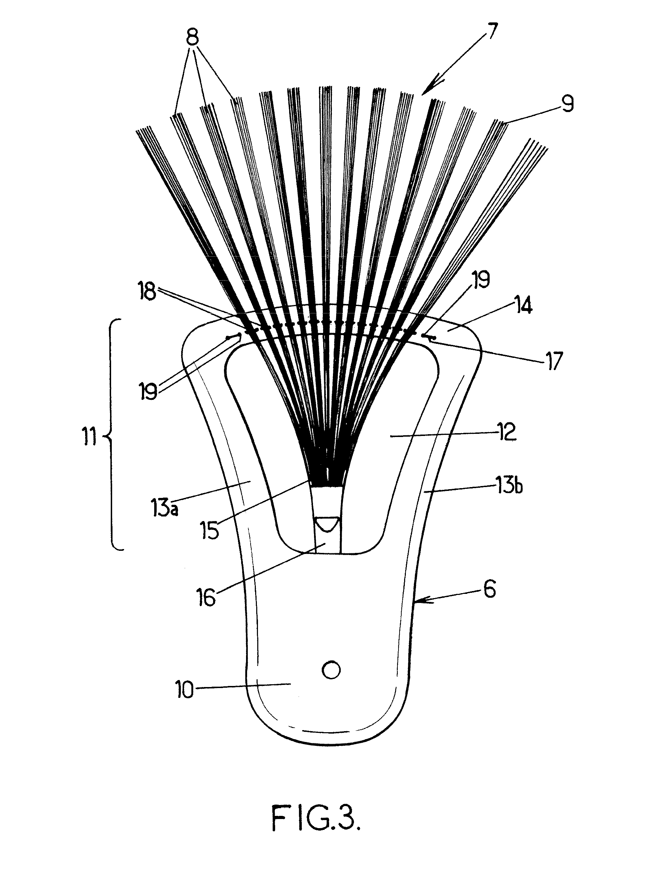

Cet outil est représenté sur la figure 3 annexée.
- La figure 3 est une vue de face de ce peigne éventail.

Ce peigne éventail (i) est constitué par une partie support 6, de préférence en bois, solidaire d'un éventail 7 formé de faisceaux 8 comportant chacun plusieurs fils flexibles 9, de préférence métalliques. Le métal choisi est par exemple l'acier trempé. La partie support 6 comprend un manche 10 prolongé par un corps 11, de forme triangulaire présentant un évidement 12 en son centre, délimité par les deux bords latéraux 13a, 13b et par le bord supérieur 14, légèrement incurvé, du corps triangulaire 11, d'une part, et par la partie supérieure d'extrémité du manche 10, d'autre part. L'éventail 7 est constitué par une botte de fils 9, dont la base 15 est maintenue par une virole 16, solidaire de la partie d'extrémité supérieure du manche 10. Les faisceaux 8 de fils 9 s'étendent à partir de la base 15, au-delà du bord supérieur 14 du corps triangulaire 11. Chaque faisceau 8 est partiellement en appui sur le bord supérieur 14 du corps triangulaire 11. Par ailleurs, une couture 17 réalisée à partir d'un fil (de préférence métallique) permet de solidariser chaque faisceau au bord supérieur 14 en définissant des bagues 18 regroupant chacune un faisceau 8. Les bagues 18 peuvent être assimilées à des cavaliers de maintien de chaque faisceau 8 ou paquets 8 de fils 9. Cette couture 17 passe au travers de trous 19 ménagés dans le bord supérieur 14. Avantageusement, la partie de l'éventail 7 de faisceaux 8 s'étendant au-delà du bord supérieur 14 du corps triangulaire 11 représente par exemple entre 30 et 40% de la longueur totale du peigne éventail (i), de l'extrémité supérieure de l'éventail jusqu'à l'extrémité inférieure du manche 10.

La longueur, le diamètre et le matériau constitutif des fils 9, sont choisis pour que leur rigidité ou leur flexibilité permette la réalisation de l'effet griffé de décoration. Le diamètre de chaque fil est par exemple compris entre 0,1 et 1 mm, de préférence, de l'ordre de 0,30 à 0,40 mm. Chaque faisceau comporte par exemple une dizaine de fils 9.

La partie de l'éventail 7 s'étendant au-delà du bord 14 supérieur mesure environ de 50 à 100 mm, par exemple de 60 à 75 mm, le corps triangulaire 11 s'étendant entre la partie de l'extrémité supérieure du manche 10 et le bord supérieur 14 a une longueur sensiblement égale à celle de la partie de l'éventail 7 s'étendant au-delà du bord supérieur 14, par exemple de 70 à 90 mm.

Les fils 9 du peigne éventail ont par exemple un diamètre de l'ordre de 0,35 mm.

Le bord supérieur 14 du corps triangulaire 11 du peigne éventail 7comprend une série (par exemple dix-huit) de trous 19 de diamètre e.g. 2 mm qui font partie intégrante de la couture 17 permettant la réalisation des bagues 18 de regroupement de faisceaux 8 de fils flexibles 9. La distance entre deux trous de couture est e.g. de 4 mm.

Pour faciliter la prise en main du peigne éventail (i), le manche peut comporter un marquage du pouce, obtenu par exemple par sérigraphie.

### ii) - Brosse, de préférence à poils de nylon pour effet brossé ou peigné

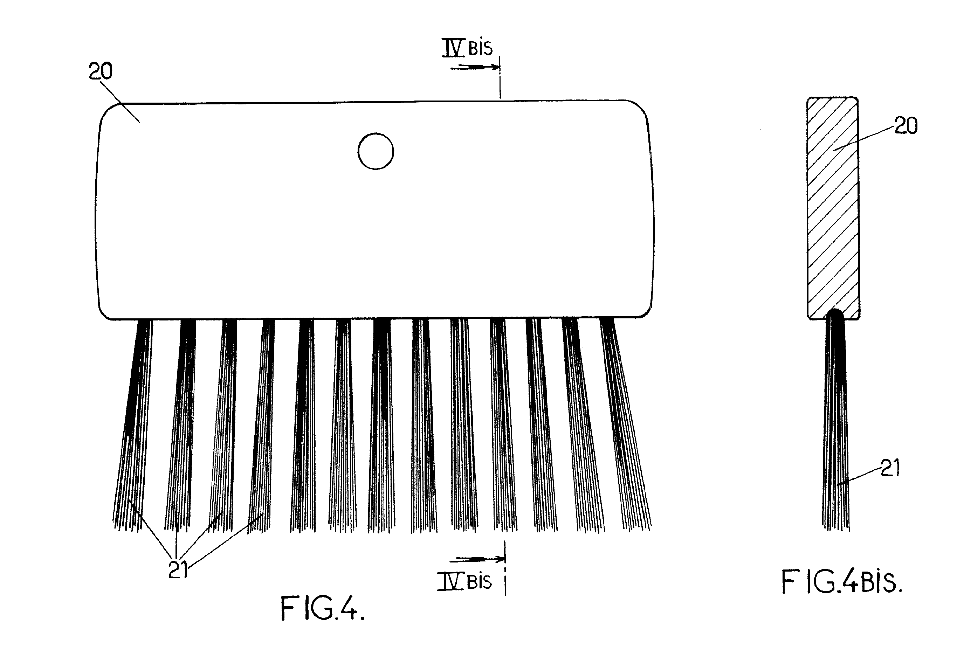

Cet outil est représenté sur les figures 4 et 4 bis.
- La figure 4 est une vue de côté de la brosse, de préférence à poils de nylon, pour effet brossé ou peigné.
- La figure 4BIS est une vue en coupe transversale selon la ligne IV-IV de la figure 4. Cette brosse comporte un manche 20, de préférence en bois, solidaire de touffes de poils 21. Ces touffes de poils, de préférence en nylon, ont pour caractéristique que leurs extrémités libres ne sont pas égalisées, de sorte que chaque touffe 21 comporte des poils, de préférence en nylon, de longueurs différentes.

Cette brosse (ii) peut être de dimensions variables (notamment la longueur) pour créer des motifs différents.

### iii) - Spatule biplaque à structures pour effets rayures ou stries

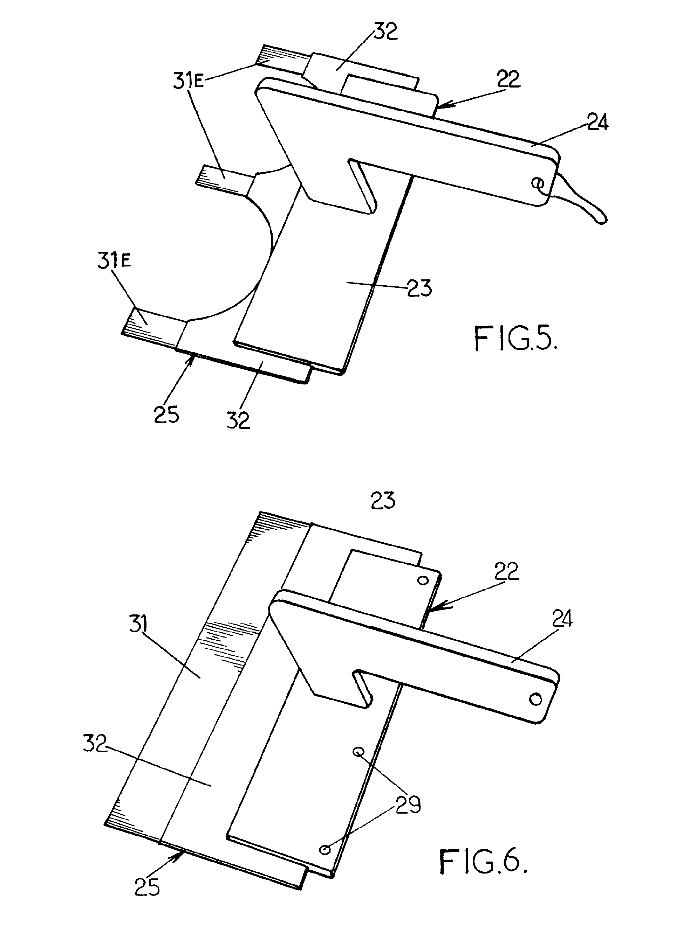

Ce nouvel outil est représenté sur les figures 5 à 12 annexées.
- La figure 5 est une vue de trois-quarts arrière en perspective d'une premier mode de réalisation de la spatule biplaque à structures.
- La figure 6 est une vue en perspective de trois-quarts arrière d'un deuxième mode de réalisation de la spatule biplaque à structures.

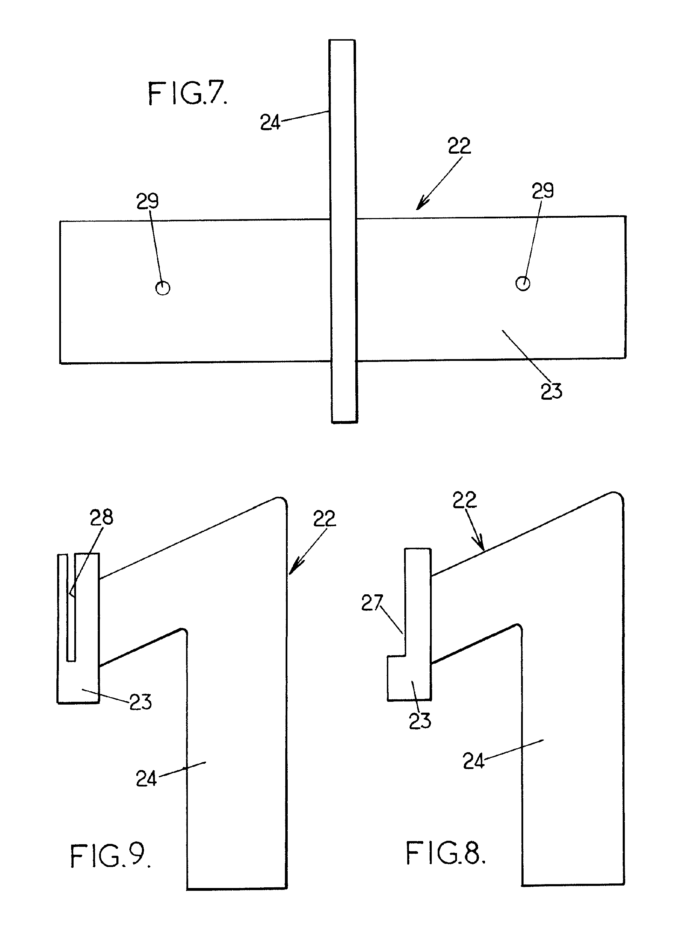

- La figure 7 est une vue de dessus du support commun aux deux formes de réalisation des figures 5 et 6.
- La figure 8 est une vue de côté de la figure 7 selon un mode préféré de réalisation du support de la figure 7.
- La figure 9 est une vue de côté selon une variante de réalisation du support de la figure 7.

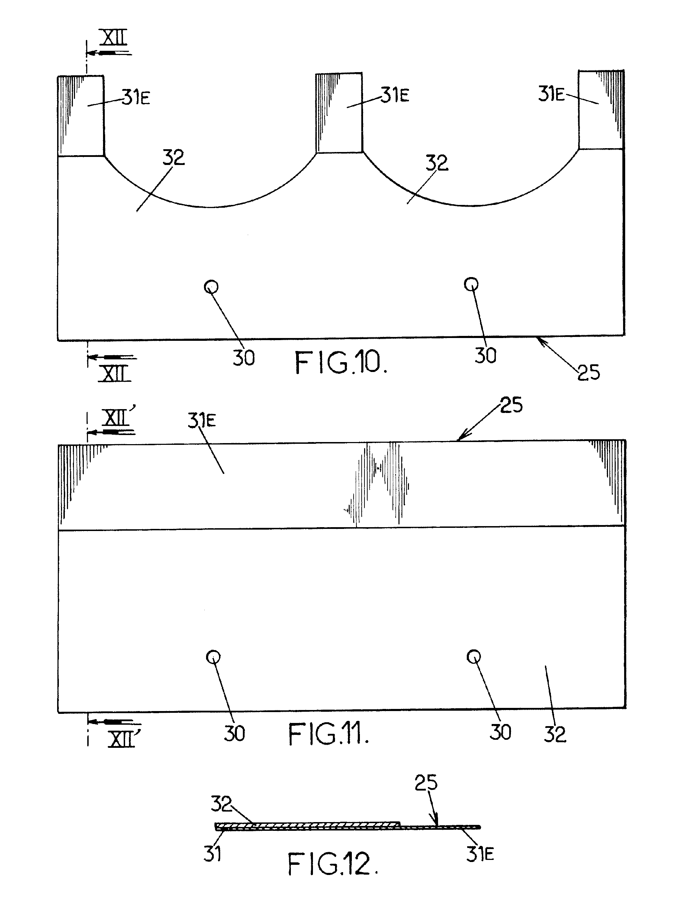

- La figure 10 est une vue de dessus de la lame flexible du premier mode de réalisation de la figure 5.
- La figure 11 est une vue de dessus de la lame flexible selon le deuxième mode de réalisation de la figure 6.
- La figure 12 est une vue en coupe transversale selon la ligne XII-XII de la figure 10 ou selon la ligne XII'-XII' de la figure 11.

Les deux modes de réalisation, figures 5 et 6, de cette spatule biplaque à structures sont constitués chacun d'un support 22, de préférence en bois ou en plastique comportant, d'une part, une embase 23 et une poignée 24 et, d'autre part, une lame flexible 25 destinée à entrer en contact avec le revêtement non durci pour façonner des motifs décoratifs à structures. Le support 22, de préférence en bois, est montré en détail aux figures 7, 8 et 9. La figure 8 montre une forme de réalisation préférée du support 22 dans laquelle l'embase 23 solidaire de la poignée 24 comporte un décrochement 27 destiné à recevoir de manière réversible ou non, l'un des bords longitudinaux de la lame flexible 26.

Dans la variante de la figure 9, l'embase 23 comprend un logement destiné à recevoir de manière réversible ou non, l'un des bords longitudinaux de la lame flexible 25, qui cette fois n'est pas un décrochement mais une fente 28.

Selon une modalité préférée de l'invention, la longueur de l'embase 23 est inférieure à la longueur de la lame flexible 25, de sorte que cette dernière déborde aux deux extrémités de l'embase 23 comme montré sur les figures 5 et 6. Selon une variante, la longueur de la lame flexible 25 peut être sensiblement la même que la longueur de l'embase 23.

Sont également prévus des moyens de fixation réversible, de la lame flexible 25 sur l'embase 23, à savoir en l'occurrence des vis 29 qui traversent la lame flexible 25 par l'intermédiaire de perforations 30.

Cette lame flexible 25 est constituée de deux plaques superposées : une grande plaque de base 31 et une petite plaque 32.

Dans une première forme de réalisation de la lame flexible 25 (figures 5 et 10), la grande plaque de base 31 présente une partie extérieure à plusieurs lamelles 31E, de préférence et en l'occurrence trois, ces lamelles 31E étant destinées à venir en contact avec la couche lissée à l'étape (c) non encore durcie, pour produire des motifs de décoration en réalisant des différences de reliefs. En l'occurrence chaque lamelle 31E génère une rayure.

Dans la deuxième forme de réalisation des figures 6 et 11, la lame flexible 25 présente une grande plaque de base 31 monolame, dont le bord longitudinal extérieur est destiné à venir en contact avec la couche lissée de l'étape (c) pour modeler des motifs décoratifs en relief, en réalisant des vagues qui donnent un effet plissé ou strié, après durcissement du revêtement.

La grande plaque de base 31 et la petite plaque 32 sont éventuellement contrecollées et/ou alors rendues solidaires l'une de l'autre par l'intermédiaire des vis 29.

La grande plaque de base 31 présente ainsi un ou plusieurs bords longitudinaux extérieurs destinés à venir en contact avec la pâte pour produire le motif décoratif. La nature du matériau constitutif de cette grande plaque de base 31 et ses dimensions sont choisies de telle sorte que la souplesse de ladite grande plaque de base soit adaptée à et facilite la création de motifs décoratifs en relief.

La petite plaque 32 donne une surépaisseur à la lame flexible 25 dans sa partie intérieure destinée à être fixée de manière réversible ou non sur l'embase 23. Naturellement, la partie intérieure plus épaisse de la lame flexible 25, est plus rigide que sa partie extérieure qui comprend le ou les bords longitudinaux extérieurs de la grande plaque de base 31.

Le matériau constitutif de la grande plaque de base 31 est par exemple un polymère tel que le polypropylène, transparent ou non (en l'espèce transparent), tandis que la petite plaque 32 est avantageusement réalisée dans un matériau polymère, par exemple un polypropylène coloré ou non, en l'occurrence blanc opaque.

Selon une autre alternative de réalisation, le support 22 pourrait ne pas comporter de poignée 24 mais simplement une embase 23 sur laquelle est montée de manière réversible ou non, une lame flexible 25.

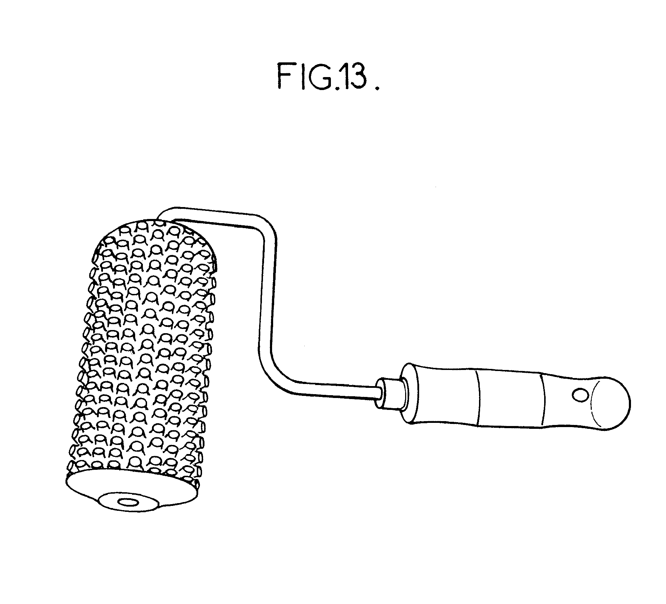

La présente invention concerne également l'utilisation d'un rouleau "débulleur" de peinture, comme un rouleau à picots ou à boucharder, pour produire lors de l'étape (d) des motifs décoratifs constitués par des trous sur la couche lissée à l'étape (c) et non encore durcie (effet picots ou effet bouchardé). - La figure 13 annexée montre de face d'un tel rouleau à picots.

Il s'agit là d'un usage innovant d'un rouleau "débulleur" de peinture, par exemple de peinture de sol.

L'étape (e) facultative du procédé de réalisation d'un revêtement décoratif selon l'invention correspond à une autre manière de créer des motifs décoratifs sur la couche lissée en (c), durcie, voire éventuellement décorée par des motifs décoratifs réalisés à l'aide des outils selon l'étape (d). Il s'agit dans cette étape d'utiliser une éponge, de préférence humide, pour faire ressortir de légers effets de nuances (blancheur/coloration). En effet le lavage peut éliminer la coloration de certaines zones pour les rendre plus blanches et créer ainsi un contraste avec les autres zones colorées.

Il est également possible, conformément à l'étape facultative (f), d'appliquer "un voile blanc" ou coloré sur la couche lissée, durcie, et éventuellement décorée selon (d) et/ou (e), de manière à obtenir d'autres nuances décoratives telles que par exemple une patine. Plus précisément, le voile blanc ou coloré est obtenu par exemple en mélangeant avec de l'eau une poudre blanche ou colorée de nature minérale en l'appliquant sur le revêtement avec une brosse e.g. pour lui donner un aspect patiné ou vieilli. L'aspect voile blanc apparaît après séchage et peut être estompé tout simplement en le frottant avec un chiffon sec pour obtenir le décor désiré.

Comme cela a déjà été signalé auparavant, le revêtement décoratif aspect béton selon l'invention est avantageusement de couleur blanche à la base et peut être coloré, de préférence en gris, qui est une couleur largement répandue pour les structures en béton ou en ciment. Cela n'exclut pas pour autant des colorations dans d'autres couleurs que la couleur de base blanche avec des colorants spécifiques adaptés.

Concernant l'étape (g) éventuelle de durcissement par séchage, il peut être considéré que dans des conditions normales de températures et d'humidité, la durée de cette étape (g) est par exemple comprise entre 24 et 48 heures pour obtenir un séchage et un durcissement complets.

Conformément à l'étape (h) facultative du procédé selon l'invention, on applique de préférence à l'aide d'un spalteur, une cire ou un vernis de protection apte à rendre le revêtement lavable et à lui donner un aspect ciré à la finition.

Selon la présente invention, le terme "cire" est considéré dans son acception la plus large, ce qui englobe notamment tous les vernis d'aspect ciré.

A titre illustratif, on peut indiquer que le taux de dépôt de la cire dans cette étape (h) est par exemple compris entre 80g et 120g/m².

Une partie des motifs décoratifs obtenus avec les moyens et les procédés selon l'invention sont des irrégularités de relief. Celles-ci peuvent être créées par simple maniement volontaire ou involontaire d'un outil. Par exemple, les effets à rayures (spatule biplaque à rayures) sont à l'image des marques laissées par les planches de coffrage du béton.

Selon une alternative de l'invention, de telles irrégularités de relief, ou plus précisément des discontinuités, peuvent être produites en appliquant des éléments amovibles sur la surface à revêtir elle-même. Il peut s'agir par exemple de signes décoratifs, lettre, chiffre, symbole, graphisme, ligne droite, brisée, courbe, pièce adhésive, ruban adhésif, etc. Ces éléments amovibles sont retirés à tout moment et in fine laissent ainsi apparaître leurs empreintes.

Tous les effets ornementaux sus-évoqués ne relèvent pas d'une protection par le brevet et en conséquence ne feront pas l'objet d'une présentation plus précise dans la présente demande.

Naturellement, la présente invention n'est nullement limitée par les motifs décoratifs susceptibles d'être réalisés sur le revêtement considéré. L'utilisateur peut en effet donner libre cours à sa créativité et à son talent pour aboutir à un résultat esthétique réussi, porteur de la personnalité de l'utilisateur.

Comme indiqué ci-dessus, la présente invention vise également un kit de revêtement décoratif tel que défini dans la revendication 17. Ce kit peut également comprendre un mode d'emploi.

On donne dans le tableau ci-après, un exemple d'une formule de la composition sèche selon l'invention.

| | |
|---|---|
| Ciment | 3 kg |
| Charge à base de plâtre, CaCO₃ et de résine | 5,4 kg |
| Absorbant cellulosique fibreux (longueur fibres circa 1000 µm) | 1 kg |
| Fibres de polyacrylonitrile [agent de flexibilité à base de fibres polyacrylates (par exemple de longueur 8 mm), destiné à donner de la souplesse et à former une armature souple] | 0,05 kg |
| Acide Tartrique [retardateur] | 0,1 kg |
| Hexamétaphosphate [agent mouillant pour diffusion colorant] | 0,05 kg |
| Vermiculite -[particules décoratives (e.g. mica) par exemple de 3 couleurs : beige - noir - or] | 0,1 kg |
| Particules de mica | 0,1 kg |
| durcisseur | 0,2 kg |
| **Total sac** | **10** kg |

## Revendications

1. Procédé de réalisation d'un revêtement décoratif sur un support par application d'une pâte, ladite pâte étant préparée selon un procédé consistant essentiellement à mélanger:
- un volume donné d'eau, et,
- une quantité donnée d'une composition comprenant (en % massique sur sec) :
● de 30 à 60 de ciment,
●de 30 à 60 de charge,
● de 0,5 à 10 d'au moins un agent absorbant,
● de 0,01 à 1 d'au moins un agent fibreux de flexibilité,
● de 0,01 à 3 d'au moins un retardateur de prise,
● de 0,01 à 1 d'agent mouillant,
● de 0,1 à 20 de particules décoratives,
● de 0,5 à 10 d'au moins un durcisseur,
● et de 0 à 1 d'au moins un colorant.

2. Procédé selon la revendication 1, **caractérisé en ce qu'**il consiste essentiellement:
a- éventuellement à préparer le support, avec une sous-couche spécifique;
b- à appliquer, de préférence à l'aide d'une taloche crantée, au moins une couche de pâte sur le support éventuellement revêtu de la sous-couche obtenue en -a-,
c- à lisser la couche obtenue en -b- au moyen d'une spatule de lissage ;
d- éventuellement à réaliser, à l'aide d'outils adaptés, des motifs décoratifs sur la couche lissée en -c- et non encore durcie;
e- éventuellement à laver la couche lissée en -c-, durcie et éventuellement décorée par des motifs obtenus à l'étape -d-, en passant une éponge de préférence humide pour produire des effets de nuances (blancheur/coloration);
f- éventuellement à appliquer un voile blanc ou coloré sur la couche lissée en -c-, durcie, et éventuellement décorée selon l'étape -d- et/ou -e-, de manière à obtenir d'autres nuances décoratives, de préférence une patine;
g- éventuellement à laisser durcir la couche lissée en -c- et éventuellement décorée selon l'étape -d- et/ou -e- et/ou -f-;
h- éventuellement à appliquer, de préférence avec un spalter ou à l'éponge, sur la couche lissée en -c-, de préférence durcie et éventuellement décorée selon l'étape - d- et/ou -e- et/ou -f-, une cire ou un vernis de protection, apte à rendre le revêtement lavable et à donner un aspect ciré à la finition.

3. Procédé selon la revendication 1 ou 2, **caractérisé en ce que** l'on utilise un rouleau "débulleur" de peintures, comme un rouleau à picots ou à boucharder pour produire lors de l'étape -d- des motifs décoratifs constitués par des petits trous sur la couche lissée en -c- et non encore durcie (effet picots ou effet bouchardé).

4. Procédé selon l'une quelconque des revendications précédentes, **caractérisé en ce qu'**il est mis en oeuvre par des outils sélectionnés dans le groupe comprenant:
- une taloche crantée comprenant une poignée reliée par une tige à une plaque dont au moins une partie des bords sont crantés et dentés, la forme et les dimensions des dents et des crans étant choisis de telle sorte que la quantité de pâte déposée sur le support à l'aide de la taloche, permette d'obtenir à l'étape -b- une couche adaptée aux étapes suivantes;
- un peigne éventail pour effet griffé comportant un manche se prolongeant par un corps de forme triangulaire évidé dans son centre, ainsi qu'une botte de fils dont la base est subdivisée en faisceaux; la base de ladite botte étant solidaire de l'extrémité supérieure du manche de sorte que les faisceaux s'étendent en éventail dans l'évidement et au delà du bord supérieur du corps triangulaire, chaque faisceau de fils étant solidarisé au bord supérieur du corps triangulaire par une bague qui regroupe les fils dudit faisceau, l'ensemble de ces bagues déterminant l'éventail de faisceaux de fils, étant de préférence obtenue par couture dans le bord supérieur du corps triangulaire; la matière, la longueur et le diamètre des fils étant choisis de manière à ce que leur rigidité soit adapté à la production de l'effet griffé;
- une brosse (de préférence à poils de nylon) pour effet brossé ou peigné et ayant pour particularité que les touffes de poils ne sont pas égalisées à leurs extrémités;
- une spatule biplaque à structures pour effet rayures ou stries comprenant, d'une part, un support comportant une embase et éventuellement une poignée, et d'autre part, une lame flexible permettant de produire des motifs décoratifs dénommés "à structures" et constituée de deux plaques superposées :
- une grande plaque de base dont le ou les bords longitudinaux extérieurs est ou sont destinés à venir en contact avec la pâte pour produire le motif, la nature du matériau constitutif de cette grande plaque et ses dimensions étant choisies de telle sorte que la souplesse soit adaptée et facilite la création de motifs décoratifs;
- une petite plaque qui donne une surépaisseur à la lame dans sa partie intérieure destinée à être fixée sur l'embase,
cette partie intérieure plus épaisse étant plus rigide que la partie extérieure souple comprenant uniquement la grande plaque.

5. Procédé selon la revendication 4, **caractérisé en ce qu'**il est mis en oeuvre par la spatule biplaque à structures, ladite spatule biplaque à structures comprenant une lame flexible choisie dans le groupe de lames flexibles comprenant :
- une lame flexible à structures dans laquelle la grande plaque de base présente une partie extérieure à plusieurs lamelles (de préférence trois) pour produire un motif décoratif à effets rayures, chaque lamelle générant une rayure;
- une lame flexible à structures dans laquelle la grande plaque de base est monolame pour produire un motif décoratif à effet plissé (ou strié).

6. Revêtement obtenu par le procédé selon l'une quelconque des revendications 1 à 4, caractérisé en qu'il est décollable avec des moyens adaptés pour le décollage du papier peint et à l'aide d'une spatule.
